# EUROPÄISCHE PATENTSCHRIFT

(11) **EP 0 607 506 B1**
(45) Veröffentlichungstag und Bekanntmachung des Hinweises auf die Patenterteilung: **04.09.1996**
(21) Anmeldenummer: 93116657.3
(22) Anmeldetag: 14.10.1993
(51) Int. Cl.: B08B 7/00, B41F 35/06

(54) **Verfahren und Vorrichtung zum Reinigen von Druckmaschinen-Zylindern**
Method and means for cleaning of cylinders in printing machines
Procédé et dispositif pour nettoyer des cylindres de machines à imprimer

(30) Priorität: 10.12.1992 DE 4241575
(43) Veröffentlichungstag der Anmeldung: 27.07.1994
(73) Patentinhaber: Baldwin-Gegenheimer GmbH, D-86068 Augsburg (DE)
(72) Erfinder: Waizmann, Franz, D-86459 Gessertshausen (DE)
(74) Vertreter: Vetter, Ewald Otto, Dipl.-Ing.

(56) Entgegenhaltungen:
- US-A- 5 151 135
- PATENT ABSTRACTS OF JAPAN vol. 14, no. 91 (M-938)20. Februar 1990 & JP-A-01 301 319 (DIAFOIL CO) 5. Dezember 1989
- PATENT ABSTRACTS OF JAPAN vol. 14, no. 584 (E-1018)27. Dezember 1990 & JP-A-02 254 721 (HITACHI) 15. Oktober 1990

## Beschreibung

Die Erfindung betrifft ein Verfahren und eine Vorrichtung zum Reinigen von Druckmaschinen-Zylindern gemäß dem Oberbegriff von Anspruch 1 und Anspruch 12.

Die Erfindung geht aus vom Stand der Technik nach der WO 89/01 412 und der DE-A-30 05 469, welche nachfolgend beschrieben werden. Ferner ist aus der US-A-5 151 135 ein Verfahren zum Reinigen von kristallinen und amorphen Oberflächen mittels eines auf die Oberflächen gerichteten Laserstrahles bekannt. Aus der JP-A-1 301 319 ist es bekannt, eine Kühlwalze, welche ein um sie herumlaufendes extrudiertes Kunststoffband kühlt, mittels eines relativ zur Kühlwalze bewegten Laserstrahles zu reinigen.

Aus der WO 89/01 412 ist ein System bekannt, bei welchem "Blanket Cylinders" durch Aufsprühen einer Mischung aus Wasser und Lösemittel gereinigt werden. Die Schmutzpartikel werden von der Wasser-Lösemittel-Mischung aufgelöst und im Preßspalt zwischen zwei benachbarten Zylindern auf den Bedruckstoff übertragen, welcher durch den Preßspalt hindurch läuft. Somit wird der Bedruckstoff mit den Schmutzpartikeln verschmutzt. In dem von der Bedrucksoffbahn anschließend durchlaufenen Trockner können die aus dem Bedruckstoff verdampfenden, leicht entzündlichen Lösungsmitteldämpfe zu einer Explosison oder Verpuffung im Trockner führen, wenn ihre Konzentration einen höchstzulässigen Wert übersteigt. Ferner ist aus der DE-A-30 05 469 ein Waschbalken zum Waschen von Gummituchzylindern eines Druckwerkes bekannt. Der Waschbalken sprüht Wasser und/oder Lösemittel zum Aufweichen und Lösen von Schmutzpartikeln auf den Gummituchzylinder und wischt mit einem Waschtuch die gelösten Schmutzpartikel vom Gummituchzylinder ab. Das Waschtuch wird von einer Saubertuchrolle auf eine Schmutztuchrolle transportiert, damit immer ein sauberer Waschtuchabschnitt an den Gummituchzylinder angelegt wird. Das verschmutzte Waschtuch muß häufig ausgewechselt werden. Der Waschbalken benötigt viel Platz, was störend ist und Schwierigkeiten bereitet, weil zwischen den einzelnen Druckwerken einer Druckmaschine nur wenig Platz vorhanden ist. Die Schmutzpartikel bestehen insbesondere aus Druckfarbenresten der auf den Bedruckstoff übertragenen Farben, aus Papierfasern des Bedruckstoffes und aus Staub.

Aus den Patent-Anmeldeveröffentlichungen EP-A-454 604, EP-A-451 304, EP-A-449 745 und DE-A-40 13 163 ist es bekannt, von einem Gegenstand Material abzutragen (ablatieren), um die Form des Gegenstandes zu verändern oder um durch äußere Schichten des Gegenstandes hindurch zu inneren Schichten des Gegenstandes Zugang zu schaffen. Im Gegensatz zu dieser Bearbeitung und beabsichtigten Veränderung der Oberfläche von Gegenständen ist jedoch gemäß der Erfindung keine Bearbeitung des Gegenstandes vorgesehen, sondern im Gegenteil, der Gegenstand und insbesondere seine Oberfläche darf nicht verändert werden. Ferner ist es auch bekannt, durch Verwendung von Laserstrahlen Gegenstände mit Materialschichten zu versehen oder mittels Laserstrahlen zu löten.

Durch die Erfindung soll die Aufgabe gelöst werden, ein Verfahren und eine Vorrichtung zu schaffen, mit welcher Druckmaschinen-Zylinder schonender, schneller und ohne störende Beeinflussung benachbarter Gegenstände, wie beispielsweise durch Verschmutzung oder Befeuchtung, und mit geringerem Vorrichtungsaufwand gereinigt werden können. Die Vorrichtung soll konstruktiv so klein sein, daß sie auch bei engen Platzverhältnissen noch auf einfache Weise benutzt werden kann. Insbesondere sollen damit Druckplattenzylinder und Gummituchzylinder gereinigt werden.

Diese Aufgabe wird gemäß der Erfindung durch die Merkmale der Patentansprüche 1 und 12 gelöst.

Weiter Merkmale der Erfindung sind in den Unteransprüchen enthalten.

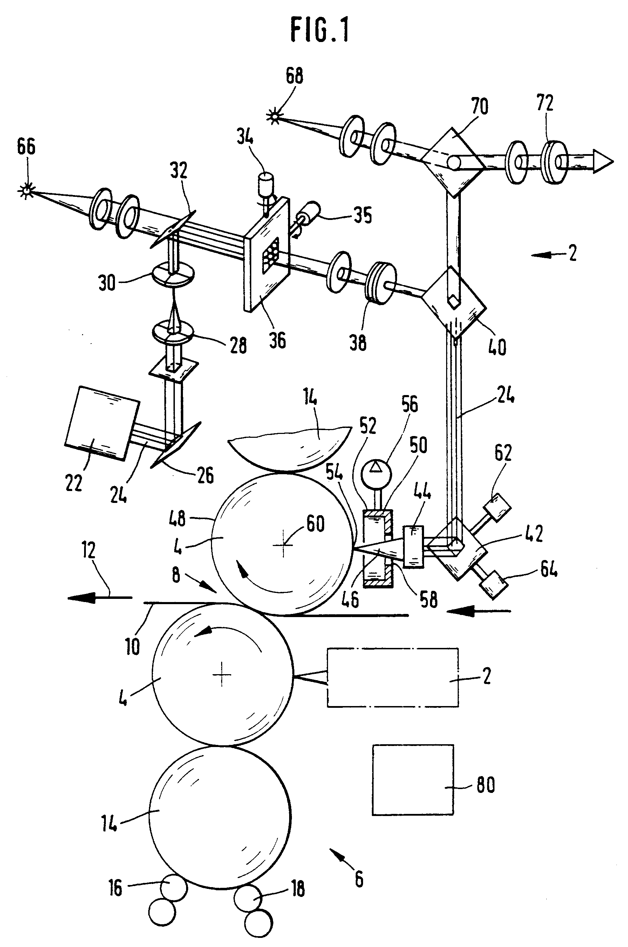

Die Erfindung wird im folgenden mit Bezug auf Fig. 1 der Zeichnung anhand einer bevorzugten Ausführungsform als Beispiel beschrieben.

Fig. 1 zeigt schematisch eine Schmutzentfernungsvorrichtung 2 zum kontaktfreien Entfernen von Schmutz von Gegenständen, wobei im vorliegenden Fall angenommen wird, daß es sich um Gummituchzylinder 4 im Druckwerk 6 einer Druckmaschine handelt. Die Druckmaschine kann eine Rollendruckmaschine zum Bedrucken von Bedruckstoffbahnen oder eine Bogendruckmaschine zum Bedrucken von einzelnen Bedruckstoffbögen sein.

Ein oberer Gummituchzylinder 4 bildet mit einem unteren Gummituchzylinder 4 einen Druckspalt 8, durch welchen ein Bedruckstoff 10 in Pfeilrichtung 12 hindurchläuft und dabei von den rotierenden Gummituchzylindern 4 mit Texten oder Bildern bedruckt wird. Das Druckwerk 6 kann in bekannter Weise für jeden Gummituchzylinder 4 einen Druckplattenzylinder 14, ein Feuchtwerk 16 und ein Farbwerk 18 enthalten. Dem unteren Gummituchzylinder 4 ist ebenfalls eine Vorrichtung 2 zum kontaktfreien Entfernen von Schmutz zugeordnet, welche in gleicher Weise ausgebildet ist wie die Vorrichtung 2 des oberen Gummituchzylinders 4 und deshalb in Fig. 1 nur strichpunktiert als Geräteeinheit schematisch dargestellt ist. Da beide Vorrichtungen 2 gleich ausgebildet sind, wird im folgenden nur die Vorrichtung 2 des oberen Gummituchzylinders 4 beschrieben. Beide Vorrichtungen 2 werden von einer nicht dargestellten elektronischen Steuereinrichtung der Druckmaschine des Druckwerkes 6 automatisch gesteuert. Dabei kann die Vorrichtung 2 des oberen Gummituchzylinders 4 zeitgleich oder zeitversetzt zur Vorrichtung 2 des unteren Gummituchzylinders 4 betrieben werden.

Jede der beiden Vorrichtungen 2 zum kontaktfreien Entfernen von Schmutz von dem zugeordneten Gummituchzylinder 4 enthält einen Excimer-Laser 22, welcher einen Laserstrahl 24 erzeugt, welcher nacheinander über einen ersten Spiegel 26 einen aus Zylinderlinsen gebildeten Strahlkompressor 28, ein Split- oder Quad-Modul 30, einen zweiten Spiegel 32, eine durch Motoren 34 und 35 steuerbare Blende 36, einen UV-Achromat 38, einen dritten Spiegel 40, einen vierten Spiegel 42 und ein Objektiv 44 als gebündelter Laserstrahl 46 auf die zu reinigende Mantelfläche 48 des oberen Gummituchzylinders 4 gelangt und an seiner Auftreffstelle auf der Mantelfläche 48 Schmutz entfernt. "Schmutz" sind insbesondere Druckfarbenreste, Papierfasern oder Stoffasern des Bedruckstoffes 10 und Staub. Der gebündelte Laserstrahl 46 löst durch seine Strahlenergie die mechanischen und chemischen Verbindungen der Schmutzpartikel auf der Mantelfläche 48 und treibt sie von der Mantelfläche 48 weg. Die von der Mantelfläche 48 abgelösten oder weggetriebenen Schmutzpartikel werden von einer Absaugvorrichtung 50 abgesaugt. Die Absaugvorrichtung weist eine Absaughaube 52 über dem zu reinigenden Bereich 54 der Zylinder-Mantelfläche 48 und einen an die Absaughaube 52 angeschlossenen Saugstromerzeuger 56 auf. Im Boden der Absaughaube 52 ist gegenüber dem Absaugbereich 54 ein Schlitz 58 gebildet, welcher sich über die gesamte Länge des Gummituchzylinders 4 parallel zu dessen Rotationsachse 60 erstreckt. Der gebündelte Laserstrahl 46 gelangt durch den Schlitz 58 hindurch auf die zu reinigende Zylinder-Mantelfläche 48. Der gebündelte Laserstrahl 46 kann durch Schwenken des Spiegels 42 mittels Stellmotoren 62 und 64 längs eines vorbestimmten Weges und einer vorbestimmten Wegstrecke innerhalb der Abmessungen des Schlitzes 58 quer, beispielsweise rechtwinkelig, zur Rotationsbewegung der Mantelfläche 48 über den Gummituchzylinder 4 bewegt werden. Dadurch ist es möglich, nur eine bestimmte Breite oder die gesamte Breite des Gummituchzylinders 4 durch den Laserstrahl 46 zu vorbestimmten Zeiten an vorbestimmten Stellen zu reinigen.

Anstelle eines einzigen gebündelten Laserstrahles 46 können mehrere solcher Laserstrahlen 46 von einer oder von mehreren Laserlichtquellen 22 auf die zu reinigende Mantelfläche 48 des Gummituchzylinders 4 gerichtet werden. Dabei werden die gebündelten Laserstrahlen 46 vorzugsweise nebeneinander angeordnet, so daß in Fig. 1 nur der vorderste Laserstrahl 46 sichtbar ist und die anderern Laserstrahlen sich deckungsgleich dahinter befinden.

Der Laserstrahl 24, 46 wird vorzugsweise nicht kontinuierlich erzeugt, sondern pulsweise. Dadurch kann auch mit wenig Energie eine gute Reinigungswirkung erzielt werden.

Wenn zur Strahlaufbereitung ein "Split"-Modul 30 verwendet wird, dann wird der Excimer-Laserstrahl in zwei parallele, leicht konvergierende Teilstrahlen aufgespalten. Bei Verwendung eines "Quad"-Moduls 30 wird der Excimer-Laserstrahl in vier parallele, leicht konvergierende Teilstrahlen aufgespalten. Diese Teilstrahlen rekombinieren in der Objektebene des Objektives 44, welche eine einstellbare Strahlblende oder Maske enthält.

Das Weißlicht einer Ziel-Beleuchtungsquelle 66 wird ebenfalls über den zweiten Spiegel 30 und die folgenden Spiegel sowie den Achromat 38 identisch wie der Laserstrahl 24, 46 in der selben Brennebene auf der zu reinigenden Oberfläche 48 abgebildet und kann dadurch als Indikator oder Pilotstrahl für den Laserstrahl verwendet werden. Die Ziel-Beleuchtungsquelle 66 erzeugt auf der zu reinigenden Oberfläche 48 eine beleuchtete Fläche, welche exakt dem Strahlenausschnitt des gebündelten Excimer-Laserstrahles 46 entspricht. Damit wird die Position des gebündelten Excimer-Laserstrahles 46 lokalisiert und der zu reinigende Flächenbereich 54 kann präzise auf der Oberfläche 48 justiert werden. Das Weißlicht einer weiteren Weißlichtquelle 68 ermöglicht über einen fünften Spiegel 70 und ein Mikroskop 72 die optische Beobachtung des vom gebündelten Laserstrahls 46 gereinigten Oberflächenbereiches 54, wobei das Weißlicht über den fünften Spiegel 70 außer zum Mikroskop 72 auch über den dritten Spiegel 40 und den vierten Spiegel 42 auf den zu reinigenden Oberflächenbereich 54 gelangt. Der zweite Spiegel 32, dritte Spiegel 40 und fünfte Spiegel 70 sind Strahlteilungsspiegel.

Der gebündelte Laserstrahl 46 reinigt die Mantelfläche 48 des Gummituchzylinders 4, ohne die Mantelfläche 48 zu verändern. Der Laserstrahl 24, 46 hat vorzugsweise eine Wellenlänge im Bereich von 100 nm bis 400 nm, seine Energiedichte liegt vorzugsweise im Bereich von 0,5 J/cm² bis 150 J/cm², der Strahlquerschnitt des gebündelten Laserstrahles 46 auf der Mantelfläche 48 hat vorzugsweise eine Größe im Bereich von 10 µm x 10µm bis 1000 µm x 1000 µm, die relative Bewegungsgeschwindigkeit zwischen der Mantelfläche 48 des Gummituchzylinders 4 und dem gebündelten Laserstrahl 46 quer zur Laserstrahlrichtung liegt vorzugsweise im Bereich von 0,5 mm/s bis 100 mm/s in Rotationsrichtung des Gummituchzylinders 4 und/oder parallel zur Zylinder-Rotationsachse 60, die Puls-Wiederholrate des gebündelten Laserstrahles liegt vorzugsweise im Bereich zwischen 1 Hz und 1 kHz, und die Pulsdauer liegt vorzugsweise im Bereich zwischen 1 ns und 50 ms für sogenannte "Excimer-Laser".

Die Laserstrahlen von Excimer-Laserstrahlvorrichtungen tragen die zu entfernenden Schmutzpartikel in erster Linie nicht durch Wärmeerzeugung ab, sondern im wesentlichen durch den Photoeffekt. Durch die hohe Quantenenergie der Photonen eines Excimer-Laserstrahles werden chemische Bindungen in dem zu entfernenden Material gebrochen. Dabei erfolgt nahezu keine thermische Beeinflussung der zu reinigenden Mantelfläche 48 des Gummituchzylinders 4. Auch können selbst kleinste Schmutzflecken bis herunter zu 1 µm noch präzise entfernt werden, ohne die Oberflächenstruktur des Gummituchzylinders 4 zu verändern.

Zur Reinigung von Gummituchzylindern 4 oder anderen Zylindern in Druckmaschinen oder zur Reinigung von anderen Gegenständen können auch bekannte Laser wie beispielsweise CO₂- oder Nd: YAG- Laser verwendet werden, mit welchen ein Materialabtrag durch Wärmeerzeugung und Verdampfung des abzutragenden Materials möglich ist. Bei der Verwendung solcher Laser ist es jedoch schwierig, nur Schmutz zu entfernen, ohne die zu reinigende Oberfläche durch den Laserstrahl zu verändern.

Bei der Bewegung des gebündelten Laserstrahles 46 quer zur Laserstrahlrichtung wird das Objektiv 44 vorzugsweise stets auf gleichem Abstand von der zu reinigenden Mantelfläche 48 gehalten.

## Patentansprüche

1. Verfahren zum Reinigen von Druckmaschinen-Zylindern, insbesondere zum Entfernen von Schmutz in Form von Farbresten, Fasern und Staub auf Zylindern in einem Druckwerk der Druckmaschine,
**dadurch gekennzeichnet,**
daß der betreffende Zylinder durch mindestens einen auf seine Oberflache gerichteten Laserstrahl kontaktlos gereinigt wird, ohne diese Oberfläche zu verändern.

2. Verfahren nach Anspruch 1,
**dadurch gekennzeichnet**, daß
mindestens ein Laserstrahl mit einer Wellenlänge im Bereich von 100 nm bis 400 nm verwendet wird.

3. Verfahren nach Anspruch 1 oder 2,
**dadurch gekennzeichnet**, daß
ein Laserstrahl mit einer Energiedichte im Bereich von 0,5 J/cm² bis 150 J/cm² verwendet wird.

4. Verfahren nach einem der Ansprüche 1 bis 3,
**dadurch gekennzeichnet**, daß
der Strahlquerschnitt auf dem Zylinder auf eine Größe im Bereich von 10 µm² bis 1x10⁶ µm² eingestellt ist.

5. Verfahren nach einem der Ansprüche 1 bis 4,
**dadurch gekennzeichnet**, daß
der Laserstrahl und die zu reinigende Oberfläche quer zur Laserstrahlrichtung mit einer Geschwindigkeit im Bereich von 0,5 mm/s bis 1000 mm/s relativ zueinander bewegt werden.

6. Verfahren nach einem der Ansprüche 1 bis 5,
**dadurch gekennzeichnet**, daß
während der Laserbestrahlung der Zylinder rotiert und der Laserstrahl auf der zu reinigenden Oberfläche quer zur Strahlrichtung parallel zur Rotationsachse des Zylinders bewegt wird.

7. Verfahren nach einem der Ansprüche 1 bis 6,
**dadurch gekennzeichnet**, daß
der Laserstrahl quer zur Strahlrichtung relativ zu der zu reinigenden Oberfläche mit gleichbleibendem Abstand des Laserstrahlauslaßelementes von der zu reinigenden Oberfläche bewegt wird.

8. Verfahren nach einem der Ansprüche 1 bis 7,
**dadurch gekennzeichnet**, daß
der Laserstrahl pulsweise auf die Oberfläche abgegeben wird.

9. Verfahren nach Anspruch 8,
**dadurch gekennzeichnet**, daß
die Puls-Wiederhol-Rate im Bereich von 1 Hz bis 1 kHz und die Pulsdauer im Bereich von 1 ns bis 50 ms liegt.

10. Verfahren nach einem der Ansprüche 1 bis 9,
**dadurch gekennzeichnet**, daß
ein Excimer-Laser verwendet wird.

11. Verfahren nach einem der Ansprüche 1 bis 10,
**dadurch gekennzeichnet**, daß
es in Abhängigkeit vom Betrieb der Druckmaschine, in welcher mittels des Laserstrahls ein Druckmaschinen-Zylinder gereinigt wird, computer-gesteuert ist.

12. Vorrichtung zum Reinigen von Druckmaschinen-Zylindern, insbesondere zum Entfernen von Schmutz in Form von Farbresten, Fasern und Staub auf Zylindern in einem Druckwerk der Druckmaschine, zur Durchführung des Verfahrens nach einem der vorhergehenden Ansprüche,
**dadurch gekennzeichnet,** daß
eine Laserstrahlvorrichtung (2, 26, 36, 40, 42, 44) vorgesehen ist, welche mindestens einen Laserstrahl (24, 46) auf die zu reinigende Oberfläche (48) des Zylinders (4) richtet und dadurch mittels des Laserstrahls von der Oberfläche Schmutz kontaktfrei entfernt, ohne die Oberfläche zu verändern, daß Mittel vorgesehen sind, durch welche der Laserstrahl (26) auf der Oberfläche des Zylinders (4) in Zylinderlängsrichtung quer zur Laserstrahlrichtung bewegt wird, während die zu reinigende Oberfläche (48) des Zylinders (4) in Umfangsrichtung rotiert, daß Mittel vorgesehen sind, durch welche die Laserstrahlreinigung in Abhängigkeit vom Betrieb der Druckwaschmaschine, in welcher mittels des Laserstrahls der Druckmaschinen-Zylinder gereinigt wird, computer-gesteuert wird, und daß eine Absaugvorrichtung (50) vorgesehen ist, welche den vom Laserstrahl (46) von der Oberfläche (48) entfernten Schmutz von der gereinigten Oberfläche (48) absaugt.

13. Vorrichtung nach Anspruch 12,
**gekennzeichnet durch**
mindestens einen Spiegel (26, 32, 40, 42), welcher den Laserstrahl (24, 46) auf seinen Weg von einem Laserstrahlerzeuger (22) zu der zu reinigenden Oberfläche (48) umlenkt.

14. Vorrichtung nach einem der Ansprüche 12 oder 13,
**gekennzeichnet** durch
ein optisches Beobachtungs- und Beleuchtungssystem (66, 32, 38, 40, 68, 70, 72) zur optischen Beobachtung des Laserstrahl-Reinigungsvorganges auf der zu reinigenden Oberfläche.

15. Vorrichtung nach einem der Ansprüche 12 bis 14,
**dadurch gekennzeichnet**, daß
mehrere solche Laserstrahlen (24, 46) einer oder mehrerer Laserlichtquellen auf die zu reinigende Oberfläche (48) des Zylinders gestrahlt werden.

## Claims

1. Process for the cleaning of printing press cylinders, especially for the removal of dirt in the form of ink residue, fibres and dust on cylinders in a printing unit of the printing press, characterized in that the cylinder in question is remotely cleaned by at least one laser beam directed on to its surface without altering this surface.

2. Process according to Claim 1,
characterized in that at least one laser beam with a wave length within the range 100 nm to 400 nm is used.

3. Process according to Claim 1 or 2,
characterized in that a laser beam is used which has an energy density within the range 0.5 J/cm² to 150 J/cm².

4. Process according to one of the Claims 1 to 3,
characterized in that the cross-section of the beam is adjusted to the cylinder to a magnitude of between 10 µm² to 1x10⁶ µm².

5. Process according to one of the Claims 1 to 4,
characterized in that the laser beam and the surface being cleaned are moved relative to one another at an angle to the direction of the laser beam at a speed within the range 0.5 mm/s to 1000 mm/s.

6. Process according to one of the Claims 1 to 5,
characterized in that during irradiation with the laser, the cylinder rotates and the laser beam is moved on the surface being cleaned at an angle to the direction of the beam and parallel to the axis of rotation of the cylinder.

7. Process according to one of the Claims 1 to 6,
characterized in that the laser beam is moved at an angle to the beam direction relative to the surface being cleaned at a constant distance of the laser beam discharge component from the surface being cleaned.

8. Process according to one of the Claims 1 to 7,
characterized in that the laser beam is delivered pulsed on to the surface.

9. Process according to Claim 8,
characterized in that the pulse repetition rate is within the range of 1 Hz to 1 kHz and the pulse duration is within the range 1 ns to 50 ms.

10. Process according to one of the Claims 1 to 9,
characterized in that an excimer laser is used.

11. Process according to one of the Claims 1 to 10,
characterized in that depending upon the operation of the printing press, in which a printing press cylinder is cleaned using the laser beam, it is computer-controlled.

12. Device for cleaning printing press cylinders, especially for the removal of dirt in the form of ink residue, fibres and dust from cylinders in a printing unit in the printing press, in order to carry out the process according to one of the foregoing Claims,
characterized in that a laser beam device (2, 26, 36, 40, 42, 44) is provided which directs a laser beam (24, 46) on to the surface (48) of the cylinder (4) being cleaned and in this way remotely removes dirt from the surface using the laser beam without altering the surface, that means are provided by which the laser beam (26) is moved on the surface of the cylinder (4) in the longitudinal direction of the cylinder at an angle to the direction of the laser beam, whilst the surface (48) of the cylinder (4) being cleaned rotates in the peripheral direction, that means are provided by means of which the cleaning by laser beam is computer controlled depending upon the operation of the printing wash unit in which the printing press cylinder is cleaned using the laser beam, and that a suction device (50) is provided which extracts the dirt removed from the surface (48) by the laser beam (46) from the cleaned surface (48).

13. Device according to Claim 12,
characterized by at least one mirror (26, 32, 40, 42) which guides the laser beam (24, 46) on its path from a laser beam generator (22) to the surface being cleaned (48).

14. Device according to one of the Claims 12 or 13,
characterized by
a visual monitoring and illumination system (66, 32, 38, 40, 68, 70, 72) for the visual monitoring of the laser beam cleaning process on the surface being cleaned.

15. Device according to one of the Claims 12 to 14,
characterized in that
several such laser beams (24, 46) from one or more laser light sources are directed on to the surface (48) of the cylinder being cleaned.

## Revendications

1. Procédé pour nettoyer des cylindres de machines à imprimer, en particulier pour enlever des impuretés sous la forme de restes d'encre, de fibres et de poussière sur des cylindres d'un groupe d'impression de la machine à imprimer, caractérisé par le fait que le cylindre concerné est nettoyé sans contact par au moins un rayon laser dirigé sur sa surface, et ce, sans que l'on ne modifie cette surface.

2. Procédé selon la revendication 1, caractérisé par le fait que l'on utilise au moins un rayon laser dont la longueur d'onde est située dans la gamme comprise entre 100 nm et 400 nm.

3. Procédé selon la revendication 1 ou 2, caractérisé par le fait que l'on utilise un rayon laser dont la densité d'énergie est située dans la gamme comprise entre 0,5 J/cm² et 150 J/cm².

4. Procédé selon l'une des revendications 1 à 3, caractérisé par le fait que la section transversale du rayon sur le cylindre est réglée sur une valeur qui est située dans la gamme comprise entre 10 µm² et 1 x 10⁶ µm².

5. Procédé selon l'une des revendications 1 à 4, caractérisé par le fait que le rayon laser et la surface à nettoyer sont déplacés l'un par rapport à l'autre, transversalement par rapport à la direction du rayon laser, à une vitesse qui est située dans la gamme comprise entre 0,5 mm/s et 1.000 mm/s.

6. Procédé selon l'une des revendications 1 à 5, caractérisé par le fait que, pendant l'irradiation par le laser, le cylindre tourne et le rayon laser est déplacé sur la surface à nettoyer transversalement par rapport à la direction du rayon et parallèlement à l'axe de rotation du cylindre.

7. Procédé selon l'une des revendications 1 à 6, caractérisé par le fait que le rayon laser est déplacé par rapport à la surface à nettoyer transversalement par rapport à la direction du rayon, la distance entre l'élément de sortie du rayon laser et la surface à nettoyer restant constante.

8. Procédé selon l'une des revendications 1 à 7, caractérisé par le fait que le rayon laser est amené par impulsions sur la surface.

9. Procédé selon la revendication 8, caractérisé par le fait que la fréquence de répétition des impulsions est située dans la gamme comprise entre 1 Hz et 1 kHz, et que la durée des impulsions est située dans la gamme comprise entre 1 ns et 50 ms.

10. Procédé selon l'une des revendications 1 à 9, caractérisé par le fait que l'on utilise un laser excimer.

11. Procédé selon l'une des revendications 1 à 10, caractérisé par le fait qu'il est commandé par ordinateur en fonction de la marche de la machine à imprimer dans laquelle un cylindre de machine à imprimer est nettoyé au moyen du rayon laser.

12. Dispositif pour nettoyer des cylindres de machines à imprimer, en particulier pour enlever des impuretés sous la forme de restes d'encre, de fibres et de poussière sur des cylindres d'un groupe d'impression de la machine à imprimer, pour la mise en oeuvre du procédé selon l'une des revendications précédentes, caractérisé par le fait qu'il est prévu un dispositif à rayon laser (2, 26, 36, 40, 42, 44) qui dirige au moins un rayon laser (24, 46) sur la surface à nettoyer (48) du cylindre (4), les impuretés étant ainsi enlevées sans contact de la surface au moyen du rayon laser sans que la surface ne soit modifiée, par le fait qu'il est prévu des moyens grâce auxquels le rayon laser (24) est déplacé sur la surface du cylindre (4) dans la direction longitudinale du cylindre et transversalement par rapport à la direction du rayon laser, tandis que la surface à nettoyer (48) du cylindre (4) tourne dans la direction circonférentielle, par le fait qu'il est prévu des moyens grâce auxquels le nettoyage au moyen du rayon laser est commandé par un ordinateur en fonction de la marche de la machine à imprimer dans laquelle le cylindre de la machine à imprimer est nettoyé au moyen du rayon laser, et par le fait qu'il est prévu un dispositif d'aspiration (50) qui aspire depuis la surface nettoyée (48) les impuretés qui sont enlevées de la surface (48) par le rayon laser (46).

13. Dispositif selon la revendication 12, caractérisé par au moins un miroir (26, 32, 40, 42) qui dévie le rayon laser (24, 46) sur son trajet allant d'un générateur de rayon laser (22) à la surface à nettoyer (48).

14. Dispositif selon l'une des revendications 12 et 13, caractérisé par un système optique d'observation et d'éclairage (66, 32, 38, 40, 68, 70, 72) qui est destiné à l'observation visuelle de l'opération de nettoyage par le rayon laser sur la surface à nettoyer.

15. Dispositif selon l'une des revendications 12 à 14, caractérisé par le fait que la surface à nettoyer (48) du cylindre est irradiée par plusieurs rayons laser de ce genre (24, 46) provenant d'une ou plusieurs sources de lumière laser.
